# EUROPEAN PATENT APPLICATION

(11) **EP 4 582 389 A1**
(43) Date of publication of application: **09.07.2025**
(21) Application number: 24223738.6
(22) Date of filing: 30.12.2024
(51) Int. Cl.: C01G 53/504, H01M 4/00

(54) **POSITIVE ELECTRODE ACTIVE MATERIALS, PREPARATION METHODS THEREOF, AND RECHARGEABLE LITHIUM BATTERIES**

(30) Priority: 04.01.2024 KR 20240001651
(71) Applicant: SAMSUNG SDI CO., LTD., Yongin-si, Gyeonggi-do 17084 (KR)
(72) Inventor: KIM, Young-Ki, 17084 Yongin-si (KR); CHOI, Aram, 17084 Yongin-si (KR); KIM, Sangmi, 17084 Yongin-si (KR); DOO, Sungwook, 17084 Yongin-si (KR); KANG, Gwiwoon, 17084 Yongin-si (KR); CHOO, Sung Ho, 17084 Yongin-si (KR); KANG, Byungwuk, 17084 Yongin-si (KR); JEONG, Jaeyong, 17084 Yongin-si (KR)
(74) Representative: Marks & Clerk LLP

(57) **Abstract**

A method of preparing a positive electrode active material, and a rechargeable lithium battery including a positive electrode active material prepared therefrom are provided. The method includes adding lithium carbonate, nickel carbonate, and cobalt carbonate to an aqueous solvent and mixing the lithium carbonate, the nickel carbonate, the cobalt carbonate, and the aqueous solvent to prepare a raw material mixture, wet-pulverizing the raw material mixture, spray-drying the pulverized raw material mixture to obtain a positive electrode active material precursor mixture, and subjecting the positive electrode active material precursor mixture to heat treatment to obtain a positive electrode active material in a form of single particles and including lithium nickel-cobalt-based composite oxide.

## Description

### BACKGROUND

### 1. Field

One or more embodiments of the present disclosure relate to positive electrode active materials, preparation methods thereof, and rechargeable lithium batteries including the positive electrodes.

### 2. Description of the Related Art

A portable information device, such as a cell phone, a laptop, smart phone, and/or the like, and/or an electric vehicle have used a rechargeable lithium battery having relatively high energy density and easy portability as a driving power source. Recently, research has been actively conducted to use a rechargeable lithium battery with high energy density as a driving power source for hybrid or electric vehicles or a power storage power source for an energy storage system (ESS) or a power wall.

Various positive electrode active materials have been investigated to realize rechargeable lithium batteries for applications to such uses. Among them, lithium nickel-based oxide, lithium nickel manganese cobalt composite oxide, lithium nickel cobalt aluminium composite oxide, and/or lithium cobalt oxide are mainly used as positive electrode active materials. Nickel-based positive electrode active materials are generally in the form of secondary particles (e.g., each) made by agglomerating a plurality of primary particles, but methods of preparing nickel-based positive electrode active materials in the form of single particles (e.g., a single monolithic particle) by methods such as pulverizing or high heat treatment have been proposed. Nickel-based positive electrode active materials in the form of single particles may improve cycle-life characteristics, and if (e.g., when) mixed with secondary particles, they may also increase energy density.

### SUMMARY

One or more aspects of embodiments of the present disclosure are directed toward a method of preparing a nickel-based single particle positive electrode active material as a one step (e.g., one-act or task) process by omitting a process of synthesizing a positive electrode active material precursor to reduce overall production and processing costs and to improve processability, which provides a method of preparing a positive electrode active material capable of achieving substantially uniform particle size distribution, relatively high initial discharge capacity and initial charge/discharge efficiency, and long cycle-life characteristics. That is, this method (of (for) preparing the nickel-based single particle positive electrode active materials) simplifies the process by eliminating the step of synthesizing a positive electrode active material precursor (e.g., hydroxide precursor). As a result, it reduces overall production and processing costs while enhancing processability. The method ensures the preparation of a positive electrode active material with substantially uniform particle size distribution, relatively high initial discharge capacity and efficiency, and long cycle-life characteristics.

Additional aspects will be set forth in part in the description which follows and, in part, will be apparent from the description, or may be learned by practice of the presented embodiments.

In one or more embodiments, a method of preparing a positive electrode active material includes adding lithium carbonate, nickel carbonate, and cobalt carbonate to an aqueous solvent and mixing them (i.e., mixing the lithium carbonate, the nickel carbonate, the cobalt carbonate, and the aqueous solvent) to prepare a raw material mixture, wet-pulverizing the raw material mixture, spray-drying the pulverized raw material mixture to obtain a positive electrode active material precursor mixture, and subjecting the positive electrode active material precursor mixture to heat treatment to obtain a positive electrode active material in a form of single particles and including lithium nickel-cobalt-based composite oxide.

In one or more embodiments, a positive electrode active material includes a lithium nickel-cobalt-based composite oxide and is in a form of single particles, wherein an average particle diameter (D₅₀) of the single particles is about 0.5 micrometers (µm) to about 8 µm and a span ((D₉₀-D₁₀)/D₅₀) value is about 0.7 to about 1.30.

In one or more embodiments, a rechargeable lithium battery includes a positive electrode including the positive electrode active material, a negative electrode, and an electrolyte.

At least some of the above and other features of the invention are set out in the claims.

The method of preparing a positive electrode active material according to one or more embodiments of the present disclosure is a method of preparing a nickel-based single particle positive electrode active material, and is a one-step (e.g., act or task) synthesis method in which a precursor synthesis process is omitted, thereby significantly reducing overall production and processing costs and improving processability. The positive electrode active material prepared as a result may have a very substantially uniform particle size distribution, and rechargeable lithium batteries using the positive electrode active material may achieve relatively high initial discharge capacity and initial charge/discharge efficiency and exhibit excellent or suitable cycle-life characteristics.

### BRIEF DESCRIPTION OF THE DRAWINGS

The above and other aspects, features, and advantages of certain embodiments of the present disclosure will be more apparent from the following description taken in conjunction with the accompanying drawings.

FIGS. 1 - 4 are each a schematic diagram showing a rechargeable lithium battery according to one or more embodiments of the present disclosure.

FIGS. 5 and 6 are each a scanning electron microscope (SEM) image of the positive electrode active material prepared in Example 1.

### DETAILED DESCRIPTION

Hereinafter, example embodiments will be described in more detail so that those of ordinary skill in the art may easily implement them. However, the present disclosure may be embodied in many different forms and is not construed as limited to the example embodiments set forth herein.

The terminology used herein is used to describe embodiments only, and is not intended to limit the present disclosure. As used herein, the singular forms "a," "an," and "the" are intended to include the plural forms as well, unless the context clearly indicates otherwise. Further, the utilization of "may" when describing embodiments of the present disclosure refers to "one or more embodiments of the present disclosure".

As used herein, "combination thereof" refers to a mixture, a laminate, a composite, a copolymer, an alloy, a blend, a reaction product, and/or the like of the constituents.

Herein, it should be understood that terms such as "comprise(s)/comprising," "include(s)/including," or "have(has)/having" are intended to designate the presence of an embodied feature, number, step (e.g., act or task), element, and/or a (e.g., any suitable) combination thereof, but it does not preclude the possibility of the presence or addition of one or more other features, numbers, steps (e.g., acts or tasks), elements, and/or a (e.g., any suitable) combination thereof.

In the drawings, the thickness of layers, films, panels, regions, and/or the like, may be exaggerated for clarity and like reference numerals designate like elements throughout the present disclosure, and duplicative descriptions thereof may not be provided for conciseness. It will be understood that if (e.g., when) an element such as a layer, film, region, or substrate is referred to as being "on" another element, it may be directly on the other element or intervening elements may also be present therebetween. In contrast, if (e.g., when) an element is referred to as being "directly on" another element, there are no intervening elements present.

In addition, "layer" as used herein may include not only a shape or layer formed on the whole surface if (e.g., when) viewed from a plan view, but also a shape or a layer formed on a partial surface.

In one or more embodiments, the average particle diameter may be measured by a method well suitable (known) to those skilled in the art, for example, by a particle size analyzer, for example, HORIBA, LA-950 laser particle size analyzer, or by a transmission electron microscope (TEM) or a scanning electron microscope (SEM). In one or more embodiments, it may obtain an average particle diameter value by measuring it using a dynamic light scattering method, performing data analysis, counting the number of particles for each particle size range, and calculating from the data. Unless otherwise defined, the average particle diameter may refer to a diameter (D₅₀) of particles having a cumulative volume of 50 volume% in a particle size distribution. D50 refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size. D90 refers to the average diameter (or size) of particles whose cumulative volume corresponds to 90 vol% in the particle size distribution (e.g., cumulative distribution), and refers to the value of the particle size corresponding to 90% from the smallest particle when the total number of particles is 100% in the distribution curve accumulated in the order of the smallest particle size to the largest particle size. D10 refers to the average diameter (or size) of particles whose cumulative volume corresponds to 10 vol% in the particle size distribution (e.g., cumulative distribution), and refers to the value of the particle size corresponding to 10% from the smallest particle when the total number of particles is 100% in the distribution curve accumulated in the order of the smallest particle size to the largest particle size. In one or more embodiments, as used herein, if (e.g., when) a definition is not otherwise provided, the average particle diameter refers to a diameter (D₅₀) of particles having a cumulative volume of 50 volume% in the particle size distribution that is obtained by measuring the size (diameter or major axis length) of about 20 particles at random in a scanning electron microscope image. In the present disclosure, when particles are spherical, "diameter" indicates a particle diameter or an average particle diameter, and when the particles are non-spherical, the "diameter" indicates a major axis length or an average major axis length.

Herein, "or" is not to be construed as an exclusive meaning, for example, "A or B" is construed to include A, B, A+B, and/or the like. Further, as utilized herein, the term "and/or" includes any and all combinations of one or more of the associated listed items. Expressions such as "at least one of," "one of," and "selected from," when preceding a list of elements, modify the entire list of elements and do not modify the individual elements of the list. For example, "at least one of a, b or c", "at least one selected from a, b, and c", "at least one selected from among a to c", etc., may indicate only a, only b, only c, both (e.g., simultaneously) a and b, both (e.g., simultaneously) a and c, both (e.g., simultaneously) b and c, all of a, b, and c, or variations thereof. The "/" utilized herein may be interpreted as "and" or as "or" depending on the situation.

As used herein, the term "metal" is interpreted as a concept including ordinary metals, transition metals, and metalloids (semi-metals). And the term "Group" as utilized herein refers to a group of the Periodic Table of Elements according to the 1 to 18 grouping system of the International Union of Pure and Applied Chemistry ("IUPAC").

### Method of Preparing Positive Electrode Active Material

According to one or more embodiments of the present disclosure, a method of preparing a positive electrode active material includes adding lithium carbonate, nickel carbonate, and cobalt carbonate to an aqueous solvent and mixing them, i.e., mixing the lithium carbonate, the nickel carbonate, the cobalt carbonate, and the aqueous solvent, to prepare a raw material mixture, wet-pulverizing the raw material mixture, spray-drying the pulverized raw material mixture to obtain a positive electrode active material precursor mixture, and subjecting the positive electrode active material precursor mixture to heat treatment to obtain a positive electrode active material in a form of single particles (e.g., a single monolithic particle) and including lithium nickel-cobalt-based composite oxide.

The preparing method, which is a method of synthesizing a single particle positive electrode active material by mixing lithium carbonate with carbonate-based metal raw materials and then, wet-pulverizing, spray-drying, and firing the mixture, may reduce production and processing costs due to omission of a process of synthesizing nickel-based hydroxide precursor in a co-precipitation method and/or the like, improve processability as an one step (e.g., act or task) process, and in addition, provide a positive electrode active material exhibiting much more substantially uniform particle distribution and achieving much more excellent or suitable capacity, efficiency, and cycle-life characteristics, compared to a positive electrode active material prepared in a comparable method.

In the raw material mixture, the nickel carbonate, the cobalt carbonate, and/or the like are used as carbonate-based metal raw materials, and the lithium carbonate is used as a lithium raw material. If (e.g., when) the carbonate-based metal raw materials and the lithium carbonate are used, because carbonate is decomposed at a temperature range of about 700 °C to about 900 °C in the subsequent heat treatment and released as CO₂, the metal raw materials may better react during this carbonate decomposition process, effectively preparing the single particle nickel-based positive electrode active material. For example, if (e.g., when) metal hydroxide, metal oxide, metal nitrate, metal sulfate, metal oxyhydroxide, metal organic acid, and/or metal chloride are(is) used as the metal raw material(s), the preparing method according to one or more embodiments may not effectively synthesize a desired or suitable single particle nickel-based positive electrode active material, wherein the nitrate and sulfate forms may have a disadvantage producing harmful substances. That is, in the raw material mixture, nickel carbonate, and cobalt carbonate are used as carbonate-based metal raw materials, while lithium carbonate is used as the lithium raw material. When these carbonate-based metal raw materials and lithium carbonate are used, the carbonate decomposes at a temperature range of about 700 °C to about 900 °C during subsequent heat treatment, releasing CO₂. This decomposition process enhances the reaction of the metal raw materials, effectively preparing the single particle nickel-based positive electrode active material. Conversely, if metal hydroxide, metal oxide, metal nitrate, metal sulfate, metal oxyhydroxide, metal organic acid, and/or metal chloride are used as the metal raw material(s), the preparation method according to some embodiments may not effectively synthesize the desired single particle nickel-based positive electrode active material. Additionally, the nitrate and sulfate forms may produce harmful substances.

In one or more embodiments, to the raw material mixture, in addition to the nickel carbonate and the cobalt carbonate, other metal raw materials may be further added, for example, a manganese raw material and/or an aluminium raw material may be further added. According to these embodiments, lithium nickel-cobalt-manganese-based composite oxide, lithium nickel-cobalt-aluminium-based composite oxide, or lithium nickel-cobalt-manganese-aluminium-based composite oxide may be synthesized. The manganese (Mn) raw material may be manganese carbonate, and the aluminium (Al) raw material may be aluminium hydroxide, aluminium oxide, and/or a (e.g., any suitable) combination thereof. For example, in one or more embodiments, in the preparing of the raw material mixture, manganese carbonate, aluminium hydroxide, aluminium oxide, and/or a (e.g., any suitable) combination thereof is further mixed.

In the raw material mixture, the metal raw materials may be mixed in an appropriate or suitable molar ratio. For example, in one or more embodiments, the metal raw materials may be mixed, so that a nickel content (e.g., amount) may be about 30 mol% to about 99 mol%, and a cobalt content (e.g., amount) may be about 1 mol% to about 70 mol%, based on 100 mol% of a total metal excluding lithium in the prepared positive electrode active material. In one or more embodiments, the nickel content (e.g., amount) may be about 30 mol% to about 98 mol%, the cobalt content (e.g., amount) may be about 1 mol% to about 40 mol%, and a manganese and/or aluminium content (e.g., amount) may be about 1 mol% to about 40 mol%, based on 100 mol% of the total metal excluding lithium in the prepared positive electrode active material.

In the raw material mixture, the lithium carbonate may be mixed to have a molar ratio of lithium to a total metal of the metal raw materials of about 0.9 to about 1.8, for example, about 0.9 to about 1.5, about 0.9 to about 1.2, about 0.9 to about 0.99, or about 1.01 to about 1.1. If (e.g., when) the molar ratio of lithium satisfies the ranges, a positive electrode active material with high capacity and excellent or suitable structural stability may be prepared.

In one or more embodiments, in the preparing step (e.g., act or task) of the raw material mixture, a dopant raw material may be further mixed. The dopant (e.g., dopant in the obtained positive electrode active material) may be one or more of other elements excluding Ni, Co, Mn, and Al, for example, include boron (B), barium (Ba), calcium (Ca), cerium (Ce), chromium (Cr), iron (Fe), magnesium (Mg), molybdenum (Mo), niobium (Nb), silicon (Si), tin (Sn), strontium (Sr), titanium (Ti), vanadium (V), tungsten (W), zirconium (Zr), and/or a (e.g., any suitable) combination thereof. The raw material of the dopant may be in the form of one or more suitable compounds such as carbonates, hydroxides, oxides, nitrates, and/or sulfates.

In the preparing method according to one or more embodiments, the raw material mixture is not dry-mixed but wet-mixed and then, wet-pulverized and spray-dried. The wet-pulverizing may be in general performed by using a wet-pulverizing equipment, for example, in a ball-milling method using a zirconia bead. In one or more embodiments, the wet-pulverizing may be performed, for example, at about 2000 revolutions per minute (rpm) to about 5000 rpm, for example, at about 3000 rpm to about 4000 rpm. In addition, the wet-pulverizing may be performed for about 5 minutes to about 120 minutes or about 10 minutes to about 60 minutes. The pulverized composition (e.g., pulverized raw material mixture) may have particles with an average diameter (D₅₀) of less than or equal to about 1 µm, less than or equal to about 0.5 µm, or less than or equal to about 0.1 µm. The diameter of the zirconia beads used in the ball milling may be, for example, 0.1 mm to 1 mm, 0.3 mm to 0.8 mm, or 0.5 mm to 0.7 mm, but is not limited thereto. If the wet-pulverizing proceeds under such conditions, a nickel-based positive electrode active material in the form of single particles with a substantially uniform particle size may be effectively prepared. D₅₀ may be measured by a particle size analyzer using a laser diffraction method for the particles.

The spray-drying may be performed by using a general spray drying device. For example, in one or more embodiments, the spray drying may be performed at about 5 mm/min to about 30 mm/min or about 10 mm/min to about 15 mm/min. In addition, the spray drying may be performed, for example, at about 150 °C to about 400 °C or about 200 °C to about 300 °C. For example, in one or more embodiments,
in the spray drying, a hot air temperature may be set at about 250 °C to about 300 °C, and a hot air discharge temperature may be set at about 100 °C to about 150 °C. If the spray drying is performed under such conditions, a nickel-based positive electrode active material in the form of single particles with a substantially uniform particle diameter may be effectively obtained.

For example, in the spray drying, some Li₂CO₃ may be recovered. For example, in the spray drying process, Li₂CO₃ dissolved in aqueous vapor may be discharged, but some Li₂CO₃ may be recovered through precipitation of this solution.

The spray-dried resulting material may be a mixture of lithium carbonate and metal carbonate, which may be expressed as a positive electrode active material precursor mixture. The obtained positive electrode active material precursor mixture may be, for example, in the form of an assembly of small particles with a size of less than or equal to about 1 µm.
The spray-dried positive electrode active material precursor mixture is subjected to heat treatment, for example, under an oxygen atmosphere at a temperature range of about 800 °C to about 1000 °C, for example, about 800 °C to about 980 °C, or about 820 °C to about 950 °C. In addition, the heat treatment may be performed for about 4 hours to about 24 hours, for example, about 5 hours to about 10 hours. If the heat treatment proceeds under such conditions, a nickel-based positive electrode active material in the form of single particles with a substantially uniform particle diameter may be effectively prepared. In one or more embodiments, the method of preparing a positive electrode active material may further include a process of pulverizing the obtained product after heat-treating the positive electrode active material precursor mixture. Through this process, a positive electrode active material in the form of single particles may be obtained.

In one or more embodiments, the obtained lithium nickel-cobalt-based composite oxide may be represented by Chemical Formula 1.

**Chemical Formula 1** **Liₐ₁Niₓ₁Co_{y1}M¹_{z1}O_{2-b1}X_{b1}**

In Chemical Formula 1, 0.9≤a1≤1.8, 0.3≤x1<1, 0<y1≤0.7, 0≤z1≤0.4, 0.9≤ x1+y1+z1≤1.1, and 0≤b1≤0.1, M¹ may be one or more elements selected from among Al, B, Ba, Ca, Ce, Cr, Cu, Fe, Mg, Mn, Mo, Nb, Si, Sn, Sr, Ti, V, W, Y, Zn, and Zr, and X may be one or more elements selected from among fluorine (F), phosphorous (P), sulfur (S), and/or a (e.g., any suitable) combination thereof.

In one or more embodiments, in Chemical Formula 1, 0.9≤a1≤1.5, or 0.9≤a1 ≤1.2, or 1.01≤a1≤1.1, 0.3≤x1≤0.99, 0.01≤y1≤0.7, 0≤z1≤0.4, or 0.3≤x1≤0.9, 0.1≤y1≤ 0.7, 0≤z1≤0.4, or 0.4≤x1≤0.9, 0.1≤y1≤0.6, 0≤z1≤0.4, or 0.5≤x1≤0.8, 0.2≤y1≤0.5, 0≤ z1≤0.3, or 0.5≤x1≤0.7, 0.3≤y1≤0.5, 0≤z1≤0.2.

In one or more embodiments, the lithium nickel-cobalt-based composite oxide may be represented by Chemical Formula 2. Chemical Formula 2 may be a lithium nickel-cobalt-manganese-based composite oxide, a lithium nickel-cobalt-aluminium-based composite oxide, or a lithium nickel-cobalt-manganese-aluminium-based composite oxide.

**Chemical Formula 2** **Liₐ₂Niₓ₂Co_{y2}M²_{z2}M³_{w2}O_{2-b2}X_{b2}**

In Chemical Formula 2, 0.9≤a2≤1.8, 0.3≤x2≤0.98, 0.01≤y2≤0.4, 0.01≤z2≤ 0.4, 0≤w2≤0.1, 0.9≤x2+y2+z2+w2≤1.1, and 0≤b2≤0.1, M² may be Al, Mn, or a (e.g., any suitable) combination thereof, M³ may be one or more elements selected from among B, Ba, Ca, Ce, Cr, Cu, Fe, Mg, Mo, Nb, Si, Sn, Sr, Ti, V, W, Y, Zn, and Zr, and X may be one or more elements selected from among F, P, S and/or a (e.g., any suitable) combination thereof.

In one or more embodiments, in Chemical Formula 2, 0.9≤a2≤1.5, or 0.9≤a2 ≤1.2, or 1.01≤a2≤1.1, 0.3≤x2≤0.9, 0.01≤y2≤0.4, 0.01≤z2≤0.4, 0≤w2≤0.1, or 0.5≤x2 ≤0.8, 0.1≤y2≤0.4, 0.1≤z2≤0.4, 0≤w2≤0.1, or 0.5≤x2≤0.7, 0.1≤y2≤0.4, 0.1≤z2≤0.4, 0 ≤w2≤0.1.

The average particle diameter (D₅₀) of the prepared single particles (e.g., the single particles of the prepared/obtained positive electrode active material) may be about 0.5 µm to about 8 µm, for example, about 1 µm to about 6 µm, or about 2 µm to about 5 µm, as a specific example, about 2.5 µm to about 5.0 µm, about 2.5 µm to about 3.8 µm, or about 2.8 µm to about 3.6 µm.

According to the preparing method of one or more embodiments, the prepared single particles may have a substantially uniform particle distribution. For example, particles with a much larger or smaller size than the average particle diameter (D₅₀) may be present in a low ratio. For example, the prepared single particles may have a span, that is, ((D₉₀-D₁₀)/D₅₀) of about 0.7 to about 2.0, for example, about 0.7 to about 1.5, about 0.7 to about 1.3, or about 0.8 to about 1.3. In addition, for example, the single particles may have D₁₀ of about 1.5 µm to about 2.5 µm and D₉₀ of about 5.5 µm to about 6.5 µm. If the single particles have a span satisfying the ranges, the single particles may have a substantially uniform particle diameter, which may increase quality of a positive electrode active material, increase energy density, and realize excellent or suitable capacity and efficiency and cycle-life characteristics. D₅₀, D₁₀, and D₉₀ may be measured by a particle size analyzer using a laser diffraction method for the positive electrode active material.

In addition, the method of preparing a positive electrode active material according to one or more embodiments may further include a process of coating the obtained positive electrode active material. The coating process may be dry-coating or wet-coating, and elements for the coating may be, for example, one or more selected from among a group consisting of Al, B, Ca, Ce, Co, Cr, Fe, Mg, Mo, Nb, Si, Sn, Sr, tantalum (Ta), V, W, Zn, and Zr. For example, the coating may include dry mixing and heat treating the positive electrode active material and coating raw material, or adding and mixing the positive electrode active material and coating raw material in an aqueous solvent, followed by drying and heat treatment. In one or more embodiment, the method of preparing a positive electrode active material may further include a process of mixing the obtained positive electrode active material and the coating raw material in a dry or wet manner and then performing a second heat treatment to obtain a coated positive electrode active material.

In one or more embodiments, the method of preparing a positive electrode active material may further include mixing the obtained positive electrode active material in the form of single particles with another positive electrode active material in the form of secondary particles.

### Positive Electrode Active Material

In one or more embodiments, a positive electrode active material includes a lithium nickel-cobalt-based composite oxide and is in a form of single particles, wherein an average particle diameter (D₅₀) of the single particles is about 0.5 µm to about 8 µm and a ((D₉₀-D₁₀)/D₅₀) value is about 0.7 to about 1.30. The positive electrode active material may be a positive electrode active material prepared through the aforementioned method and may achieve excellent or suitable performance due to the substantially uniform particle diameter.

The single particles may have an average particle diameter (D₅₀) of, for example, about 1 µm to about 6 µm or about 2 µm to about 5 µm, ((D₉₀-D₁₀)/D₅₀) of, for example, about 0.7 to about 1.30, or about 0.8 to about 1.30. For example, in one or more embodiments, the single particles may have D₅₀ of about 2.5 µm to about 5.0 µm, D₁₀ of about 1.5 µm to about 2.5 µm, and D₉₀ of about 5.5 µm to about 6.5 µm. In one or more embodiments, the single particles may have D₅₀ of, for example, about 2.5 µm to about 3.8 µm or about 2.8 µm to about 3.6 µm. If the single particles have D₅₀, D₁₀, D₉₀, and ((D₉₀-D₁₀)/D₅₀) respectively satisfying the ranges, the single particles have a substantially uniform particle diameter, and thus the positive electrode active material may achieve excellent or suitable capacity, efficiency, cycle-life, and energy density characteristics. D₅₀, D₁₀, and D₉₀ may be measured by a particle size analyzer using a laser diffraction method for the positive electrode active material.

Herein, the lithium nickel-cobalt-based composite oxide may be represented by Chemical Formula 1 or Chemical Formula 2, and/or the like., as described above. In addition, the single particles may be the same average particle diameter and span as described above.

Furthermore, the positive electrode active material according to one or more embodiments may include the single particles and a coating layer on the surface of each of the single particles, wherein the coating layer may include one or more elements selected from the group consisting of Al, B, Ca, Ce, Co, Cr, Fe, Mg, Mo, Nb, Si, Sn, Sr, Ta, V, W, Zn, and Zr.

In one or more embodiments, the single particles may be mixed with another positive electrode active material in the form of secondary particles, wherein the single particles may be included in an amount of about 5 wt% to about 60 wt%, about 5 wt% to about 40 wt%, or about 10 wt% to about 30 wt% based on 100 wt% of a total weight of the single particles and the secondary particles.

Herein, the single particles may exist alone without a grain boundary within the particle, is composed of one particle, and may be a monolith structure, a one body structure, or a non-agglomerated particle, in which particles are not agglomerated with each other but exist as an independent phase in terms of morphology, and may be expressed as one body particle, or single grain, for example, as a single crystal. The single particles may exist alone, or single particles may be grouped together. For example, 2 to 10 single particles may be grouped together and in contact with each other.

### Positive Electrode

In one or more embodiments, a positive electrode for a rechargeable lithium battery including the positive electrode active material of the present disclosure is provided. For example, in one or more embodiments, the positive electrode may include a positive electrode current collector, and a positive electrode active material layer on the positive electrode current collector, and the positive electrode active material layer includes the positive electrode active material of the present disclosure, and optionally a binder, a conductive material (e.g., electron conductor), and/or a (e.g., any suitable) combination thereof.

### Binder

The binder improves binding properties of positive electrode active material particles with one another and with the positive electrode current collector. Examples of binders may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but embodiments of the present disclosure are not limited thereto.

### Conductive Material

The conductive material may be included to provide electrode conductivity, and any electrically conductive material may be used as a conductive material unless it causes a chemical change. Non-limiting examples of the conductive material may include a carbon-based material such as natural graphite, artificial graphite, carbon black, acetylene black, Ketjen black, a carbon fiber, a carbon nanofiber, a carbon nanotube, and/or the like; a metal-based material of a metal powder or a metal fiber including copper, nickel, aluminium, silver, and/or the like; a conductive polymer such as a polyphenylene derivative; and/or a (e.g., any suitable) mixture thereof.

Each content (e.g., amount) of the binder and the conductive material may be about 0.5 wt% to about 5 wt% based on 100 wt% of a total weight of the positive electrode active material layer.

The positive electrode current collector may include Al (aluminium), but embodiments of the present disclosure are not limited thereto.

### Rechargeable Lithium Battery

According to one or more embodiments of the present disclosure, a rechargeable lithium battery may include the aforementioned positive electrode, a negative electrode, and an electrolyte. In one or more embodiments, the rechargeable lithium battery may include the positive electrode, a negative electrode, a separator between the positive electrode and the negative electrode, and an electrolyte solution (i.e., electrolyte).

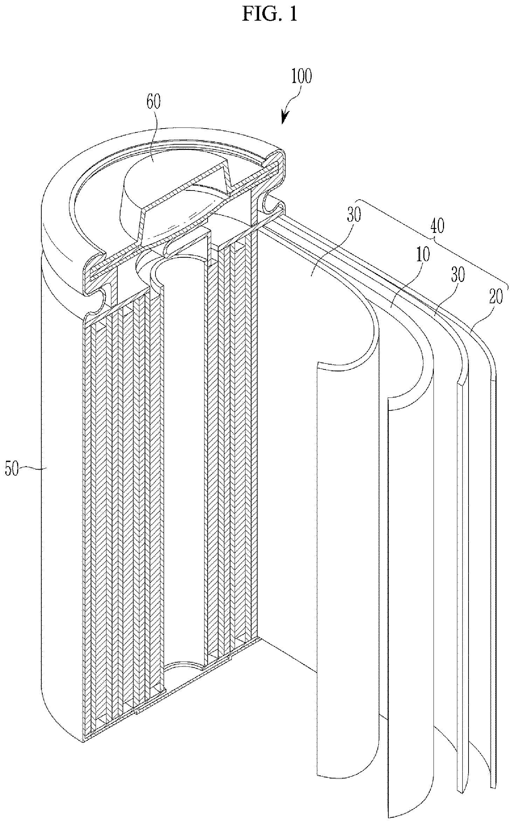

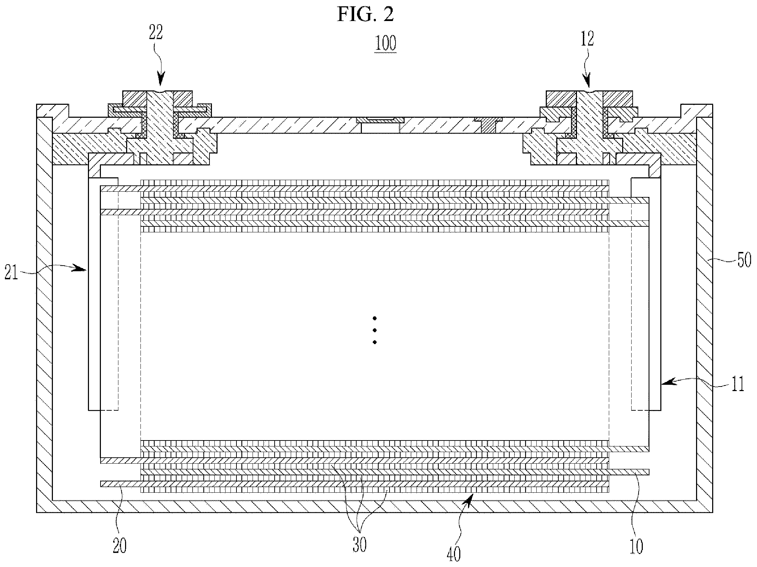

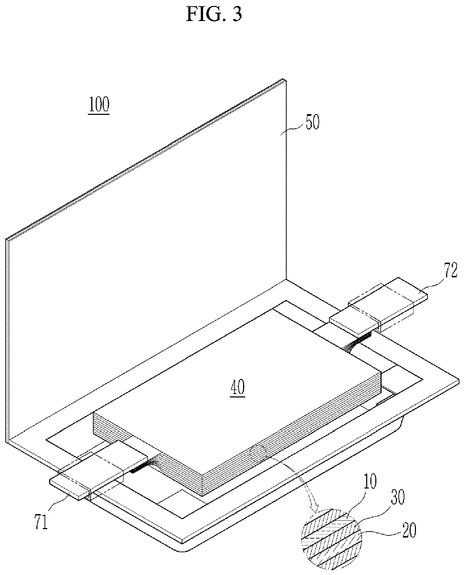

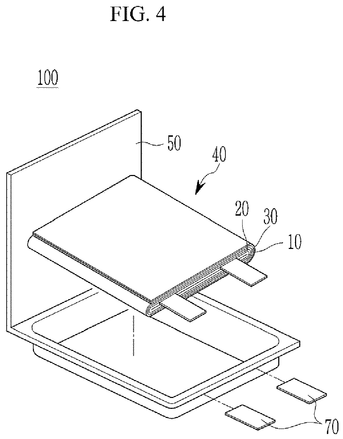

The rechargeable lithium battery may be classified into cylindrical, prismatic, pouch, coin, and/or the like, depending on the shape thereof. FIGS. 1 to 4 are each a schematic diagram showing the rechargeable lithium battery according to one or more embodiments, where FIG. 1 shows a cylindrical battery, FIG. 2 shows a prismatic battery, and FIGS. 3 and 4 each show a pouch-shaped battery. Referring to FIGS. 1 to 4, the rechargeable lithium battery 100 may include an electrode assembly 40 with a separator 30 interposed between a positive electrode 10 and a negative electrode 20, and a case 50 in which the electrode assembly 40 is housed. The positive electrode 10, the negative electrode 20, and the separator 30 may be impregnated with an electrolyte solution. In some embodiments, the rechargeable lithium battery 100 may include a sealing member 60 that seals the case 50 as shown in FIG. 1. In some embodiments, as shown in FIG. 2, the rechargeable lithium battery 100 may include a positive electrode lead tab 11, a positive electrode terminal 12, a negative lead tab 21, and a negative electrode terminal 22. In some embodiments, as shown in FIGS. 3 and 4, the rechargeable lithium battery 100 includes an electrode tab 70, that is, a positive electrode tab 71 and a negative electrode tab 72, serving as an electrical path for inducing the current formed in the electrode assembly 40 to the outside.

### Negative Electrode

The negative electrode may include a negative electrode current collector and a negative electrode active material layer on the negative electrode current collector, and the negative electrode active material layer may include a negative electrode active material, a binder, a conductive material, and/or a (e.g., any suitable) combination thereof.

### Negative Electrode Active Material

The negative electrode active material may include a material that reversibly intercalates/deintercalates lithium ions, a lithium metal, a lithium metal alloy, a material capable of doping/dedoping lithium, and/or a transition metal oxide.

The material that reversibly intercalates/deintercalates lithium ions may include, for example, crystalline carbon, amorphous carbon, and/or a (e.g., any suitable) combination thereof as a carbon-based negative electrode active material. The crystalline carbon may be irregularly shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and/or the like.

The lithium metal alloy may include an alloy of lithium and one or more metals selected from among sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminium (Al), and tin (Sn).

The material capable of doping/dedoping lithium may be a Si-based negative electrode active material or a Sn-based negative electrode active material. The Si-based negative electrode active material may include silicon, a silicon-carbon composite, SiOx (0 < x ≤ 2), a Si-Q alloy (wherein Q is an element selected from among an alkali metal, an alkaline-earth metal, a Group 13 element, a Group 14 element (excluding Si), a Group 15 element, a Group 16 element, a transition metal, a rare earth element, and/or a (e.g., any suitable) combination thereof, for example, magnesium (Mg), calcium (Ca), strontium (Sr), barium (Ba), radium (Ra), scandium (Sc), yttrium (Y), titanium (Ti), zirconium (Zr), hafnium (Hf), rutherfordium (Rf), vanadium (V), niobium (Nb), tantalum (Ta), dubnium (Db), chromium (Cr), molybdenum (Mo), tungsten (W), seaborgium (Sg), technetium (Tc), rhenium (Re), bohrium (Bh), iron (Fe), lead (Pb), ruthenium (Ru), osmium (Os), hassium (Hs), rhodium (Rh), iridium (Ir), palladium (Pd), platinum (Pt), copper (Cu), silver (Ag), gold (Au), zinc (Zn), cadmium (Cd), boron (B), aluminium (Al), gallium (Ga), tin (Sn), indium (In), thallium (Tl), germanium (Ge), phosphorous (P), arsenic (As), antimony (Sb), bismuth (Bi), sulfur (S), selenium (Se), tellurium (Te), polonium (Po), and/or a (e.g., any suitable) combination thereof), and/or a (e.g., any suitable) combination thereof. The Sn-based negative electrode active material may be Sn, SnOₓ (0 < x ≤ 2) (e.g., SnO₂), a Sn alloy, and/or a (e.g., any suitable) combination thereof.

The silicon-carbon composite may be a composite of silicon and amorphous carbon, in a form of particles. An average particle diameter (D₅₀) of the silicon-carbon composite particles may be, for example, about 0.5 µm to about 20 µm. According to one or more embodiments, the silicon-carbon composite may be in the form of silicon particles and amorphous carbon coated on the surface of each of the silicon particles. For example, in one or more embodiments, the silicon-carbon composite may include a secondary particle (core) in which silicon primary particles are assembled (e.g., agglomerated) and an amorphous carbon coating layer (shell) on the surface of the secondary particle. In one or more embodiments, the amorphous carbon may also be present between the silicon primary particles, for example, the silicon primary particles may be coated with amorphous carbon. The secondary particles may exist dispersed in an amorphous carbon matrix.

In one or more embodiments, the silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, and/or a (e.g., any suitable) combination thereof. The amorphous carbon may include soft carbon or hard carbon, a mesophase pitch carbonized product, and/or calcined coke.

If (e.g., when) the silicon-carbon composite includes silicon and amorphous carbon, a content (e.g., amount) of silicon may be about 10 wt% to about 50 wt% and a content (e.g., amount) of amorphous carbon may be about 50 wt% to about 90 wt% based on 100 wt% of a total weight of the silicon-carbon composite. In addition, if (e.g., when) the silicon-carbon composite includes silicon, amorphous carbon, and crystalline carbon, a content (e.g., amount) of silicon may be about 10 wt% to about 50 wt%, a content (e.g., amount) of crystalline carbon may be about 10 wt% to about 70 wt%, and a content (e.g., amount) of amorphous carbon may be about 20 wt% to about 40 wt%, based on 100 wt% of a total weight of the silicon-carbon composite.

In one or embodiments, a thickness of an amorphous carbon coating layer may be about 5 nanometers (nm) to about 100 nm. An average particle diameter (D₅₀) of the silicon particles (primary particles) may be about 10 nm to about 1 µm, or about 10 nm to about 200 nm. The silicon particles may exist as silicon alone, in the form of a silicon alloy, or in an oxidized form. The oxidized form of silicon may be represented by SiOₓ (0<x≤2). In this regard, an atomic content (e.g., amount) ratio of Si:O, which indicates a degree of oxidation, may be about 99:1 to about 33:67. As used herein, if (e.g., when) a definition is not otherwise provided, an average particle diameter (D₅₀) indicates a particle where an accumulated volume is about 50 volume% in a particle distribution.

In one or more embodiments, the Si-based negative electrode active material or Sn-based negative electrode active material may be mixed with the carbon-based negative electrode active material. If (e.g., when) the Si-based negative electrode active material or Sn-based negative electrode active material and the carbon-based negative electrode active material are mixed and used, a mixing ratio thereof may be a weight ratio of about 1:99 to about 90:10.

### Binder

The binder serves to suitably and/or well adhere the negative electrode active material particles to each other and also to adhere the negative electrode active material to the negative electrode current collector. The binder may be a non-aqueous (e.g., water-insoluble) binder, an aqueous (e.g., water-soluble) binder, a dry binder, and/or a (e.g., any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a (e.g., any suitable) combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and/or a (e.g., any suitable) combination thereof.

If (e.g., when) an aqueous binder is used as the binder of the negative electrode, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming fiber, and may be, for example, polytetrafluoroethylene, polyvinylidene fluoride, a polyvinylidene fluoride-hexafluoropropylene copolymer, polyethylene oxide, and/or a (e.g., any suitable) combination thereof.

### Conductive Material

The conductive material may be included to provide electrode conductivity and any electrically conductive material may be used as a conductive material unless it causes a chemical change. Non-limiting examples of the conductive material include a carbon-based material such as natural graphite, artificial graphite, carbon black, acetylene black, Ketjen black, a carbon fiber, a carbon nanofiber, a carbon nanotube, and/or the like; a metal-based material of a metal powder or a metal fiber including copper, nickel, aluminium, silver, and/or the like; a conductive polymer such as a polyphenylene derivative; and/or a (e.g., any suitable) mixture thereof.

In one or more embodiments, a content (e.g., amount) of the negative electrode active material may be about 95 wt% to about 99.5 wt% based on 100 wt% of a total weight of the negative electrode active material layer, and a content (e.g., amount) of the binder may be about 0.5 wt% to about 5 wt% based on 100 wt% of the total weight of the negative electrode active material layer. For example, in one or more embodiments, the negative electrode active material layer may include about 90 wt% to about 99 wt% of the negative electrode active material, about 0.5 wt% to about 5 wt% of the binder, and about 0.5 wt% to about 5 wt% of the conductive material, based on 100 wt% of the total weight of the negative electrode active material layer.

### Negative Electrode Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), or an alloy thereof, and may be in the form of a foil, a sheet, or a foam. A thickness of the negative electrode current collector may be, for example, about 1 µm to about 20 µm, about 5 µm to about 15 µm, or about 7 µm to about 10 µm.

### Electrolyte

In one or more embodiments, the electrolyte for a rechargeable lithium battery may be an electrolyte, which may include a non-aqueous organic solvent and a lithium salt.

The non-aqueous organic solvent serves as a medium for transmitting ions taking part in the electrochemical reaction of the rechargeable lithium battery. The non-aqueous organic solvent may be a carbonate-based solvent, an ester-based solvent, an ether-based solvent, a ketone-based solvent, an alcohol-based solvent, an aprotic solvent, or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In addition, the ketone-based solvent may include cyclohexanone, and/or the like. The alcohol-based solvent may include ethanol, isopropyl alcohol, and/or the like, and the aprotic solvent may include nitriles such as R-CN (wherein R is a C2 to C20 linear, branched, or cyclic hydrocarbon group, and may include a double bond, an aromatic ring, or an ether group), and/or the like; amides such as dimethylformamide; dioxolanes such as 1,3-dioxolane, 1,4-dioxolane, and/or the like; sulfolanes; and/or the like.

The non-aqueous organic solvent may be used alone or in a mixture of two or more types (kinds), and if (e.g., when) two or more types (kinds) are used in a mixture, a mixing ratio may be appropriately or suitably adjusted according to the desired or suitable battery performance, which is widely suitable to those working in the field.

If (e.g., when) using a carbonate-based solvent, a cyclic carbonate and a chain carbonate may be mixed and used, and the cyclic carbonate and the chain carbonate may be mixed in a volume ratio of about 1:1 to about 1:9.

In one or more embodiments, the non-aqueous organic solvent may further include an aromatic hydrocarbon-based organic solvent. For example, in some embodiments, a carbonate-based solvent and an aromatic hydrocarbon-based organic solvent may be mixed and used in a volume ratio of about 1:1 to about 30:1.

In one or more embodiments, the electrolyte may further include vinylethylene carbonate, vinylene carbonate, or an ethylene carbonate-based compound to improve battery cycle-life.

Non-limiting examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the non-aqueous organic solvent supplies lithium ions in the rechargeable lithium battery, enables a basic operation of the rechargeable lithium battery, and improves transportation of the lithium ions between positive and negative electrodes. Non-limiting examples of the lithium salt may include at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of about 0.1 M to about 2.0 M. If (e.g., when) the concentration of lithium salt is within the above range, the electrolyte has appropriate or suitable ionic conductivity and viscosity, and thus excellent or suitable performance may be achieved and lithium ions may move effectively.

### Separator

Depending on the type or kind of the rechargeable lithium battery, a separator may be present between the positive electrode and the negative electrode. The separator may include polyethylene, polypropylene, polyvinylidene fluoride, or a multilayer film of two or more layers thereof, or a mixed multilayer film such as a polyethylene/polypropylene two-layer separator, a polyethylene/polypropylene/polyethylene three-layer separator, a polypropylene/polyethylene/polypropylene three-layer separator, and/or the like.

The separator may include a porous substrate and a coating layer including an organic material, an inorganic material, and/or a (e.g., any suitable) combination thereof on a surface (e.g., one or both (e.g., simultaneously) surfaces (e.g., two opposite surfaces)) of the porous substrate.

The porous substrate may be a polymer film formed of any one polymer selected from among polyolefin such as polyethylene and/or polypropylene, polyester such as polyethylene terephthalate and/or polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON), or a copolymer or a mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and/or a structural unit derived from (meth)acrylamidosulfonic acid or a salt thereof.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, and/or a (e.g., any suitable) combination thereof, but embodiments of the present disclosure are not limited thereto. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

A thickness of the coating layer may be about 0.5 µm to about 20 µm, for example, about 1 µm to about 10 µm, or about 1 µm to about 5 µm.

Examples and comparative examples of the present disclosure will be described in more detail herein. However, the following examples are mere examples of the present disclosure, and the present disclosure is not limited to the following examples.

### Example 1

### 1. Preparation of Positive Electrode Active Material

Li₂CO₃, NiCOs, CoCOs, and MnCOs as raw materials were added to distilled water and mixed to have a molar ratio of Ni:Co:Mn = 50:20:30 and a molar ratio of Li/(Ni+Co+Mn) =1.03. The obtained raw material mixture was put in a wet-pulverizing device and then, milled by using a zirconia bead with a diameter of 0.65 mm at about 3500 rpm for about 30 minutes. The pulverized composition had particles with an average particle diameter (D₅₀) of about 0.5 µm or less.

The pulverized composition was spray-dried at 15 mm/min at about 245 °C by using a spray-drying device to prepare a precursor mixture.

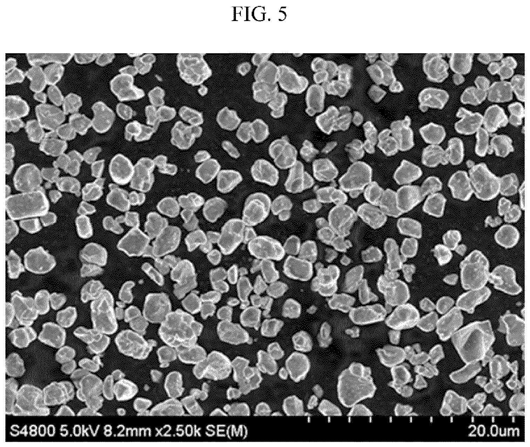

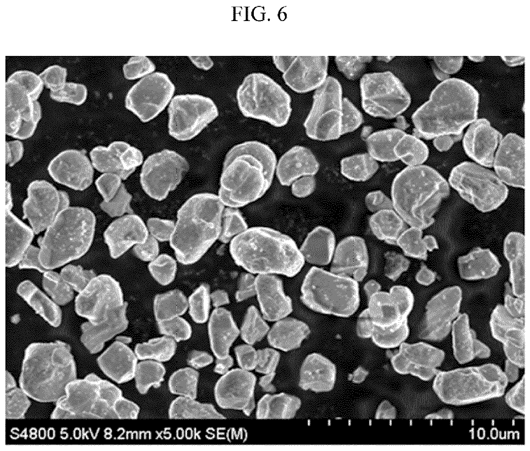

The precursor mixture was heat-treated at 950 °C under an oxygen atmosphere for 8 hours. Subsequently, the heat-treated precursor mixture was crushed and filtered to prepare a positive electrode active material (Li_{1.03}Ni_{0.5}Co_{0.2}Mn_{0.3}O₂) according to Example 1. FIG. 5 illustrates an SEM image of the positive electrode active material according to Example 1, and FIG. 6 illustrates an image enlarging the SEM image of FIG. 5. Referring to FIGS. 5 and 6, the positive electrode active material turned out to be in the form of single particles with a substantially uniform particle size distribution.

### 2. Manufacturing of Rechargeable Lithium Battery Cell

98.5 wt% of the positive electrode active material, 1.0 wt% of a polyvinylidene fluoride binder, and 0.5 wt% of a carbon nanotube conductive material were mixed to prepare a positive electrode active material layer slurry, and the positive electrode active material layer slurry was coated on an aluminium foil current collector and then, dried and compressed to manufacture a positive electrode.

Between the positive electrode and a lithium metal counter electrode, a polytetrafluoroethylene separator was interposed to manufacture an electrode assembly, and after inserting the electrode assembly into a battery case, an electrolyte solution prepared by dissolving 1 M LiPF₆ in a solvent of ethylene carbonate and dimethyl carbonate in a volume ratio of 3:7 was injected thereinto to manufacture a rechargeable lithium battery cell (half-cell) in a common method.

### Example 2

A positive electrode active material and a rechargeable lithium battery cell were each manufactured in substantially the same manner as in Example 1 except that the raw materials were mixed to have a molar ratio of Ni:Co:Mn = 60:10:30, and the firing temperature was changed to 900 °C.

### Example 3

A positive electrode active material and a rechargeable lithium battery cell were each manufactured in substantially the same manner as in Example 1 except that the raw materials were mixed to have a molar ratio of Ni:Co:Mn = 65:5:30, and the firing temperature was changed to 850 °C.

### Example 4

After preparing a positive electrode active material in substantially the same manner as in Example 1, aluminium oxide was mixed with the positive electrode active material to have 1 part by weight of aluminium based on 100 parts by weight of a total metal excluding lithium in the positive electrode active material and then, secondarily heat-treated at 850 °C for 8 hours, crushed, and filtered, obtaining a coated positive electrode active material. Except for this, a positive electrode active material and a rechargeable lithium battery cell were each manufactured in substantially the same manner as in Example 1.

### Comparative Example 1

After preparing nickel-based hydroxide in a general co-precipitation method, the nickel-based hydroxide was dry-mixed with a lithium raw material and then, heat-treated to obtain a positive electrode active material in the form of secondary particles, which were pulverized to obtain a single particle positive electrode active material.

For example, nickel sulfate (NiSO₄·6H₂O), cobalt sulfate (CoSO₄·7H₂O), and manganese sulfate (MnSO₄·H₂O) in a molar ratio of Ni:Co:Mn=55:15:30 were added to distilled water to prepare a metal raw material mixed solution. In addition, in order to form a complex compound, aqueous ammonia (NH₄OH) and sodium hydroxide (NaOH) as a precipitation agent were prepared.

First, the aqueous ammonia at a concentration of 0.25 M was put in a reactor. Subsequently, the metal raw material mixed solution and a complex agent were added thereto respectively at 142 mL/min and 34 mL/min at a reaction temperature of 50 °C at stirring power of 3.0 kW/m³ to start a reaction. The reaction was conducted for 30 hours, while adding NaOH thereto in order to maintain pH. The reaction was terminated when the obtained particles reached an average size of about 14 µm. The obtained product was washed and then, dried with hot air at about 150 °C for 24 hours to prepare a precursor of the positive electrode active material, Ni_{0.55}Co_{0.15}Mn_{0.30}(OH)₂.

The precursor and Li₂CO₃ were dry-mixed in a molar ratio of Li/(Ni+Co+Mn)=1.03, and heat-treating the mixture at 920 °C for 8 hours, obtaining lithium nickel-cobalt-manganese composite oxide in the form of secondary particles. The secondary particles were pulverized to have an average particle diameter (D₅₀) of about 2.5 µm by using an airflow impact mill to obtain a single particle positive electrode active material (Li_{1.03}Ni_{0.55}Co_{0.15}Mn_{0.30}O₂).

### Comparative Example 2

A positive electrode active material and a rechargeable lithium battery cell were each manufactured in substantially the same manner as in Comparative Example 1 except that the raw materials were mixed to have a molar ratio of a Ni:Co:Mn= 60:10:30, and the firing temperature was changed to 900 °C.

### Comparative Example 3

A positive electrode active material and a rechargeable lithium battery cell were each manufactured in substantially the same manner as in Comparative Example 1 except that the raw materials were mixed to have a molar ratio a molar ratio of Ni:Co:Mn= 62:6:32, and the firing temperature was changed to 850 °C.

### Comparative Example 4

Li₂CO₃, NiCOs, CoCOs, and MnCOs as raw materials were dry-mixed in a molar ratio of Ni:Co:Mn=60:10:30 and a molar ratio of Li/(Ni+Co+Mn) =1.03. The obtained mixture was heat-treated at 900 °C for 8 hours under an oxygen atmosphere to prepare a positive electrode active material according to Comparative Example 4. Except for this, a positive electrode active material and a rechargeable lithium battery cell were each manufactured in substantially the same manner as in Example 1.

### Evaluation Example 1: Evaluation of Particle Size Distribution

Each of the positive electrode active materials of Examples 1 to 4 and Comparative Examples 1 to 4 was analyzed with respect to particle distribution by using a particle size analyzer using a laser diffraction method, and the results are shown in Table 1.

**Table 1**

| | D₅₀ | D₁₀ | D₉₀ | (D₉₀-D₁₀)/D₅₀ |
|---|---|---|---|---|
| Example 1 | 3.4 | 1.7 | 6.0 | 1.26 |
| Example 2 | 3.5 | 1.8 | 5.9 | 1.17 |
| Example 3 | 3.4 | 1.7 | 6.1 | 1.29 |
| Example 4 | 3.6 | 1.7 | 6.1 | 1.22 |
| Comparative Example 1 | 3.9 | 1.2 | 6.8 | 1.44 |
| Comparative Example 2 | 4.0 | 1.2 | 6.9 | 1.43 |
| Comparative Example 3 | 4.2 | 1.3 | 7.0 | 1.36 |
| Comparative Example 4 | 4.1 | 1.4 | 6.8 | 1.32 |

Referring to Table 1, each of the examples satisfied D₅₀ of 2.5 µm to 5.0 µm, D₁₀ of 1.5 µm to 2.5 µm, D₉₀ of 5.5 µm to 6.5 µm, and ((D₉₀-D₁₀)/D₅₀) of 1.29 or less and thus had a very substantially uniform particle distribution.

### Evaluation Example 2: Evaluation of Initial Charge/discharge Capacity, Efficiency, and Cycle-life Characteristics

The rechargeable lithium battery cells of Examples 1 to 3 and Comparative Examples 1 to 4 were each charged to 4.45 V at a constant current of 0.2 C and to 0.05 C at the constant voltage and then, discharged to 3.0 V at 0.2 C and at 25 °C to proceed with initial charging and discharging. In Table 2, initial charge capacity and initial discharge capacity are provided, and initial charging and discharging efficiency of the latter to the former is provided as efficiency.

Subsequently, the cells were each 50 times repeatedly charged and discharged at 1.0 C within a voltage range of 3.0 V to 4.45 V at 45 °C. In Table 2, a ratio of discharge capacity at the 50^{th} cycle to the initial discharge capacity was calculated and provided as cycle-life.

**Table 2**

| | Ni:Co: Mn | Raw material | Mixing | Charge capacit y (mAh/g) | Dischar ge capacit y (mAh/g) | Effici ency (%) | Cycl e-life (%) |
|---|---|---|---|---|---|---|---|
| Ex. 1 | 50:20:30 | Li₂CO₃, NiCO₃, CoCO₃, MnCO₃ | wet-pulverizing +spray-drying | 215.10 | 186.1 | 86.5 | 93.6 |
| Ex. 2 | 60:10:30 | Li₂CO₃, NiCO₃, CoCO₃, MnCO₃ | wet-pulverizing +spray-drying | 220.50 | 197.8 | 89.7 | 93.2 |
| Ex. 3 | 65:5:30 | Li₂CO₃, NiCO₃, CoCO₃, MnCO₃ | wet-pulverizing +spray-drying | 223.70 | 197.1 | 88.1 | 92.1 |
| Comp. Ex. 1 | 55:15:30 | Li₂CO₃, Ni-Co-Mn-OH | solid-phase | 213.9 | 184.0 | 86.1 | 90.9 |
| Comp. Ex. 2 | 60:10:30 | Li₂CO₃, Ni-Co-Mn-OH | solid-phase | 219.7 | 194.0 | 88.3 | 88.8 |
| Comp. Ex. 3 | 62:6:32 | Li₂CO₃, Ni-Co-Mn-OH | solid-phase | 222.1 | 193.6 | 87.2 | 87.6 |
| Comp. Ex. 4 | 60:10:30 | Li₂CO₃ NiCO₃, CoCO₃, MnCO₃ | solid-phase | 213.0 | 180.2 | 84.6 | 80.6 |

Referring to Table 2, Examples 1 to 3 achieved relatively high initial discharge capacity, initial charging and discharging efficiency, and cycle-life characteristics. Example 1 exhibited much higher initial discharge capacity, initial charging and discharging efficiency, and cycle-life characteristics than that of Comparative Example 1 having a slightly high nickel content (e.g., amount). Example 2 and Comparative Example 2 had the same nickel content (e.g., amount), Example 2 exhibited significantly improved initial charging and discharging efficiency and also, improved cycle-life characteristics, as the initial discharge capacity increased, compared to Comparative Example 2. Likewise, Example 3 having a similar nickel content (e.g., amount) to that of Comparative Example 3 exhibited improved initial charging and discharging efficiency, as the initial discharge capacity slightly increased, and significantly improved cycle-life characteristics. Comparative Example 4 using the same raw materials as the examples but applied with a solid-phase mixing method exhibited low initial charging and discharging efficiency due to low initial discharge capacity and particularly, deteriorated cycle-life characteristics.

Accordingly, the method of preparing a positive electrode active material according to one or more embodiments was confirmed to not only significantly reduce production and processing costs due to omission of a precursor synthesis process and the overall simple method but also provide a produced single particle positive electrode active material having a substantially uniform particle diameter and achieving much more excellent or suitable initial discharge capacity, initial charging and discharging efficiency, and cycle-life characteristics in a high voltage region.

As used herein, the terms "substantially," "about," and similar terms are used as terms of approximation and not as terms of degree, and are intended to account for the inherent deviations in measured or calculated values that would be recognized by those of ordinary skill in the art. "About" or "approximately," as used herein, is also inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, or 5% of the stated value.

In the context of the present disclosure and unless otherwise defined, the terms "use," "using," and "used" may be considered synonymous with the terms "utilize," "utilizing," and "utilized," respectively.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

A battery (e.g., a positive electrode active material) manufacturing device, a battery management system (BMS) device, and/or any other relevant devices or components according to embodiments of the present disclosure described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

While the present disclosure has been described in connection with what is presently considered to be example embodiments, it is to be understood that present disclosure is not limited to the disclosed embodiments. In contrast, it is intended to cover one or more suitable modifications and equivalent arrangements included within the scope of the appended claims and equivalents thereof.

**Reference Numerals**

| | | | |
|---|---|---|---|
| 100: | rechargeable lithium battery | 10: | positive electrode |
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |

## Claims

1. A method of preparing a positive electrode active material, comprising adding lithium carbonate, nickel carbonate, and cobalt carbonate to an aqueous solvent and mixing the lithium carbonate, the nickel carbonate, the cobalt carbonate, and the aqueous solvent to prepare a raw material mixture,
wet-pulverizing the raw material mixture,
spray-drying the pulverized raw material mixture to obtain a positive electrode active material precursor mixture, and
subjecting the positive electrode active material precursor mixture to heat treatment to obtain a positive electrode active material in a form of single particles and comprising lithium nickel-cobalt-based composite oxide.

2. The method as claimed in claim 1, wherein
in the preparing of the raw material mixture, manganese carbonate, aluminium hydroxide, aluminium oxide, or a combination thereof is further mixed.

3. The method as claimed in claim 1 or claim 2, wherein
in the preparing of the raw material mixture, a dopant raw material is further mixed, and
a dopant comprises B, Ba, Ca, Ce, Cr, Fe, Mg, Mo, Nb, Si, Sn, Sr, Ti, V, W, Zr, or a combination thereof.

4. The method as claimed in any one of claims 1 to 3, wherein
the wet-pulverizing is performed utilizing zirconia ball milling at 2000 rpm to 5000 rpm for 5 minutes to 120 minutes.

5. The method as claimed in any one of claims 1 to 4, wherein
in the wet-pulverizing, the raw material mixture is pulverized until an average particle diameter (D₅₀) of the pulverized raw material mixture in a form of particles is less than or equal to 0.5 µm.

6. The method as claimed in any one of claims 1 to 5, wherein
the spray-drying is performed by setting a hot air temperature to 200 °C to 300 °C and a hot air discharge temperature to 100 °C to 150 °C.

7. The method as claimed in any one of claims 1 to 6, wherein
the heat treatment of the positive electrode active material precursor mixture is performed in an oxygen atmosphere at a temperature range of 800 °C to 1000 °C for 4 hours to 24 hours.

8. The method as claimed in any one of claims 1 to 7, wherein
the lithium nickel-cobalt-based composite oxide is represented by Chemical Formula 1:
Chemical Formula 1 Liₐ₁Niₓ₁Co_{y1}M¹_{z1}O_{2-b1}X_{b1},
in Chemical Formula 1,
0.9≤a1≤1.8, 0.3≤x1<1, 0<y1≤0.7, 0≤z1≤0.4, 0.9≤x1+y1+z1≤1.1, and 0≤b1≤ 0.1,
M¹ being one or more elements selected from among Al, B, Ba, Ca, Ce, Cr, Cu, Fe, Mg, Mn, Mo, Nb, Si, Sn, Sr, Ti, V, W, Y, Zn, and Zr, and
X being one or more elements selected from among F, P, and S, optionally wherein
the lithium nickel-cobalt-based composite oxide is represented by Chemical Formula 2:
Chemical Formula 2 Liₐ₂Niₓ₂Co_{y2}M²_{z2}M³_{w2}O_{2-b2}X_{b2},
in Chemical Formula 2,
0.9≤a2≤1.8, 0.3≤x2≤0.98, 0.01≤y2≤0.4, 0.01≤z2≤0.4, 0≤w2≤0.1, 0.9≤ x2+y2+z2+w2≤1.1, and 0≤b2≤0.1,
M² being Al, Mn, or a combination thereof,
M³ being one or more elements selected from among B, Ba, Ca, Ce, Cr, Cu, Fe, Mg, Mo, Nb, Si, Sn, Sr, Ti, V, W, Y, Zn, and Zr, and
X being one or more elements selected from among F, P, and S.

9. The method as claimed in any one of claims 1 to 8, wherein:
(i) an average particle diameter (D₅₀) of the prepared single particles is 0.5 µm to 8 µm; and/or
(ii) a span ((D₉₀-D₁₀)/D₅₀) value of the prepared single particles is 0.7 to 2.0.

10. The method as claimed in any one of claims 1 to 9, further comprising: coating the obtained positive electrode active material.

11. The method as claimed in claim 10, wherein:
(i) the coating of the obtained positive electrode active material comprises:
dry mixing and heat treating the positive electrode active material and a coating raw material; or
adding and mixing the positive electrode active material and a coating raw material in an aqueous solvent, followed by drying and heat treatment; and/or
(ii) a coating element utilized in the coating of the obtained positive electrode active material comprises Al, B, Ca, Ce, Co, Cr, Fe, Mg, Mo, Nb, Si, Sn, Sr, Ta, V, W, Y, Zn, Zr, or a combination thereof.

12. A positive electrode active material, comprising
a lithium nickel-cobalt-based composite oxide and being in a form of single particles,
wherein an average particle diameter (D₅₀) of the single particles is 0.5 µm to 8 µm and a span ((D₉₀-D₁₀)/D₅₀) value is 0.7 to 1.30.

13. The positive electrode active material as claimed in claim 12, wherein
the single particles have D₅₀ of 2.5 µm to 5.0 µm, D₁₀ of 1.5 µm to 2.5 µm, and D₉₀ of 5.5 µm to 6.5 µm.

14. A rechargeable lithium battery, comprising
a positive electrode comprising the positive electrode active material prepared by the method as claimed in any one of claims 1 to 11,
a negative electrode, and
an electrolyte.

15. A rechargeable lithium battery, comprising
a positive electrode comprising the positive electrode active material as claimed in claim 12 or claim 13,
a negative electrode, and
an electrolyte.
